# EUROPEAN PATENT SPECIFICATION

(11) **EP 3 714 527 B1**
(45) Date of publication and mention of the grant of the patent: **03.11.2021**
(21) Application number: 17801463.5
(22) Date of filing: 22.11.2017
(51) Int. Cl.: H02K 5/02, H02K 5/128, H02K 11/33, H02K 11/40, H02K 7/14, H02K 21/14

(54) **VEHICLE FLUID PUMP**
AUTOMOTIVE ELECTRIC FLUID PUMP
POMPE ÉLECTRIQUE AUTOMOBILE À FLUIDE

(43) Date of publication of application: 30.09.2020
(73) Proprietor: Pierburg Pump Technology GmbH, 41460 Neuss (DE)
(72) Inventor: GOOTZ, Reinhard, 40789 Monheim am Rhein (DE); RIEFERS, Stephan, 47803 Krefeld (DE); STEVANOVIC, Predrag, 40667 Meerbusch (DE); BIRINCI, Ercan, 40221 Düsseldorf (DE); FINDEISEN, Alexander, 04720 Döbeln (DE)
(74) Representative: terpatent Patentanwälte ter Smitten Eberlein-Van Hoof Rütten Daubert
(86) International application number: PCT/EP2017/080055
(87) International publication number: WO 2019/101304

(56) References cited:
- EP-A1- 2 725 691
- JP-A- 2015 136 280
- JP-A- 2016 039 672
- US-A1- 2014 017 073

## Description

The invention is directed to a vehicle fluid pump, in particular to a fluid pump provided with an electronically commutated canned motor.

These vehicle fluid pumps are provided with an electronically commutated motor arranged within a pump housing for driving a pump wheel co-rotatably provided with a motor rotor. Vehicle fluid pumps can be, for example, used as coolant pumps or as lubricant pumps. The pump motor comprises a motor stator with a stator body, preferably a laminated stator body, and with a plurality of stator coils. The pump motor also comprises a permanently magnetized motor rotor and is provided with a motor electronics unit with an electric ground terminal. The motor electronics unit is electrically connected to the stator coils for energizing the stator coils and thereby driving the motor rotor and the co-rotatably provided pump wheel.

The motor stator and the motor rotor are fluidically separated by a cylindrical motor can. As a result, the permanently magnetized motor rotor can be arranged within the fluidic part of the pump and can be easily attached to the pump wheel. The electromagnetic stator with the energized stator coils and the motor electronics unit can be arranged on the dry side of the motor can. No dynamic sealings are needed.

Like all other electronic devices, electronically commutated motors emit electromagnetic interferences, in particular electromagnetic radiation, which can cause malfunction or failure of electronic devices in vicinity of the motor, for example vehicle traction motor electronics. As a consequence, electronic devices have to comply with electromagnetic compatibility (EMC) directives.

JP 2016 039672 A discloses a vehicle fluid pump with a pot-shaped metal motor can and with an electric connection means which defines a direct electric connection between the ground terminal of the motor electronics and the metal motor can. The disclosed electric connection means is in contact with a bottom wall of the motor can which requires the motor can bottom wall to be electrically conductive. This however restricts the freedom of the design for the motor can and thus for the vehicle fluid pump.

It is an object of the present invention to provide a versatile vehicle fluid pump with an electronically commutated canned motor with good EMC-characteristics of the pump.

This object is achieved with a vehicle fluid pump with the features of claim 1.

The vehicle fluid pump according to the invention is provided with a pump housing, an electronically commutated motor, and with a pump wheel which is co-rotatably provided with a motor rotor. Electronically commutated motors provide a high power to weight ratio, high rotational speeds and can be provided with an electronic closed-loop control. This allows providing a very compact vehicle pump which can be easily integrated into the vehicle electrical control system. Preferably, the vehicle pump is supplied with low DC supply voltages of less than 50 V.

The electronically commutated motor of the vehicle fluid pump according to the invention is provided with a motor stator comprising a stator body and a plurality of stator coils. The motor is also provided with a permanently magnetized motor rotor fluidically separated from the motor stator by a cylindrical metal motor can. The electromagnetic motor stator with the energized stator coils is arranged at the dry side of the motor can, and the permanently magnetized motor rotor is arranged at the wet side of the motor can. The generated stator magnetic field penetrates and travels through the metal motor can and drives the permanently magnetized motor rotor and, as a result, drives the pump wheel co-rotatably provided with the motor rotor. This allows a simple co-rotatable connection of the motor rotor and the pump wheel within the fluidic part of the pump, and also allows protecting the electrically energized stator coils and the electronics from being in contact with the pumping fluid.

The electronically commutated motor of the vehicle fluid pump according to the invention is also provided with a motor electronics unit with an electric ground terminal. The motor electronics unit is located at the dry side of the metal motor can to protect the sensitive motor electronics from being in contact with the pumping fluid. The motor electronics unit is electrically connected to the stator coils for energizing the stator coils for driving the motor rotor. The motor electronics unit comprises several power semiconductors for commutating the electric energy energizing the stator coils.

The electronically commutated motor of the vehicle fluid pump according to the invention is also provided with an electric connection means providing a direct electric connection of minimal electric resistance between the motor electronics unit ground terminal and the metal motor can. The direct electric connection provides an equipotential bonding between the metal motor can and the motor electronics. As a result, the metal motor can serves as an electromagnetic shielding significantly suppressing the emitted interferences of the electronically commutated pump motor so that the EMC of the vehicle pump can be dramatically improved. The electric connection means according to the invention is in direct electrical contact with the outside circumferential surface of the cylindrical metal motor can. This allows contacting metal motor cans with a non-conductive motor can bottom, for example a metal tube with a plastic cap.

Preferably, the pump housing is made of plastic. Plastics housings can be manufactured inexpensively, for example by injection molding, and are lightweight. As a result, the plastic housing allows reducing cost and weight of the vehicle pump. However, a plastic housing has no electric shielding effect.

In a preferred embodiment of the invention, the metal motor can is provided as a cylindrical metal tube. A cylindrical metal tube can be easily introduced in the cylindrical air gap between the motor stator and the motor rotor to fluidically separate both. The metal tube can be supported by the pump housing and can be fluid-tightly sealed by a bottom cap to fluidically separate the motor stator from the motor rotor.

Alternatively, the metal motor can can be provided as a cylindrical metal pot which can be easily introduced into the stator rotor air gap, the metal pot being supported by the pump housing and fluidically separating the motor rotor from the motor stator.

In a preferred embodiment of the invention, the motor electronics unit is arranged at a thermally conductive axial end part of the motor can. The end part can be, for example, provided by a metal pot bottom. The electronics unit is electrically isolated from and thermally connected to the motor can by a thermal compound. The thermal compound allows a heat transfer between the motor electronics and the metal motor can to efficiently dissipate the heat which is generated by the motor electronics unit.

Preferably, the electric connection means is provided as a metal spring attached to the motor electronics unit ground terminal and being in electrical contact with the metal motor can. The metal spring provides a simple and reliable electrical contact. The metal spring allows to compensate oscillations of the motor can with respect to the motor electronics unit and allows a simple mounting process.

In a preferred embodiment of the invention, the electric connection means is directly electrically connected with the ferromagnetic motor stator body so that the electric potential of the motor electronics unit electric ground connection and of the stator body are equalized. This allows good EMC-characteristics of the vehicle pump.

Embodiments of the invention are described with reference to the accompanying drawings, wherein
figure 1 shows a schematic longitudinal section of a vehicle fluid pump with a connection means which does not fall within the claimed scope of protection,
figure 2 shows a connection means according to the invention for the vehicle fluid pump of figure 1, and
figure 3 shows an alternative arrangement of a motor control unit and another connection means according to the invention for the vehicle fluid pump of figure 1.

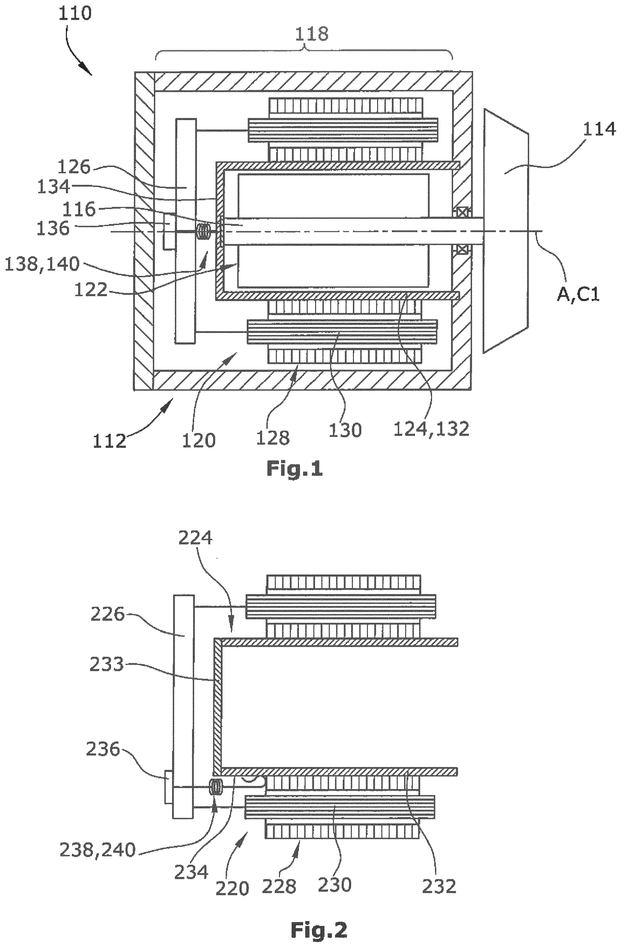

Figure 1 shows a schematic longitudinal section of a vehicle fluid pump 110 with a plastic pump housing 112, a pump wheel 114 co-rotatably attached to a rotor shaft 116 of an electronically commutated motor 118. The pump wheel 114 is an impeller. The electronically commutated motor 118 is provided with a motor stator 120, a permanently magnetized motor rotor 122 co-rotatably provided with the rotor shaft 116 and rotatable around an axis of rotation A, a cylindrical metal motor can 124 and a motor electronics unit 126.

The motor stator 120 comprises a ferromagnetic stator body 128, preferably a laminated stator body 128, and comprises several stator coils 130 electrically connected to the motor electronics unit 126.

The cylindrical metal motor can 124 is provided as a cylindrical metal pot 132 axially supported by the pump housing 112. The axial cylinder centerline C1 of the motor can 124 corresponds to the axis of rotation A. The motor can 124 fluidically separates the motor stator 120 arranged at the dry radial outside of the motor can 124 from the motor rotor 122 arranged at the wet radial inside of the motor can 124.

The motor electronics unit 126 is arranged axially outwardly of and close to the motor can bottom 134 at the dry side of the motor can 124. The motor electronics unit 126 commutates the electric energy energizing the stator coils 130 for driving the motor rotor 122 and, as a result, for driving the co-rotatably provided pump wheel 114. The motor electronics unit 126 comprises an electric ground terminal 136 which is directly electrically connected to the motor can 124 by an electric connection means 138. The electric ground terminal 136 can be, for example, provided as a printed circuit path electrically connected to the chassis ground of the vehicle pump 110.

The electric connection means 138 is provided as a metal coil spring 140 fixed, for example soldered, to the motor electronics unit electric ground terminal 136 and being in touching electric contact with the center of the motor can bottom 134. The metal coil spring 140 is preloaded in axial direction to compensate axial oscillations of the motor electronics unit 126 with respect to the motor can 124 and, as a result, to assure a reliable electric connection. The electric connection means 138 equalizes the electric potentials of the motor electronics unit electric ground terminal 136 and of the motor can 124 so that the emitted interferences of the electronically commutated motor 118 are suppressed significantly. As a result, the EMC of the vehicle fluid pump 110 is improved.

Figure 2 shows a motor stator 220 with a stator body 228 and with several stator coil 230, a motor control unit 226 with an electric ground terminal 236, an alternative motor can 224 and an alternative connection means 238 of the vehicle fluid pump 110.

The motor can 224 comprises a cylindrical metal tube 232 axially supported by the pump housing 212, and comprises a circular non-metallic motor can cap 233 fluid-tightly attached to the non-supported axial end of the metal tube 232.

The motor electronics unit 226 is arranged axially outwardly of the motor can 224 and close to the non-metallic motor can cap 233 at the dry side of the motor can 224. The motor electronics unit electric ground terminal 236 is directly electrically connected to the motor can 224 and to the stator body 228 by an electric connection means 238 provided as metal spring 240.

The metal spring 240 is fixed to the motor electronics unit electric ground terminal 236. The metal spring 240 is radially in contact with a circumferential surface 234 of the motor can 224 and axially in contact with the stator body 228. The metal spring 240 is preloaded in axial direction to compensate axial oscillations of the motor electronics unit 226 with respect to the stator body 228. The metal spring 240 is also preloaded in radial direction, in particular radially inwardly, to compensate radial oscillations of the motor electronics unit 226 with respect to the motor can 224.

The electric connection means 238 assures a reliable electric connection between the motor electronics unit electric ground terminal 236, the motor can 224 and the stator body 228 so that the electric potentials are equalized. As a result, emitted interferences of the electronically commutated motor 218 can be minimized and the EMC of the vehicle fluid pump 210 can be improved.

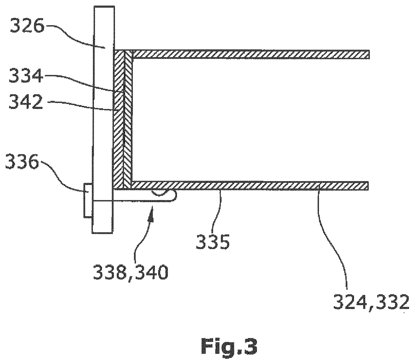

Figure 3 shows a motor can 324 provided as a cylindrical metal pot 332, a motor control unit 326 with an electric ground terminal 336 and another alternative connection means 338 of the vehicle fluid pump 110.

The motor electronics unit 326 is arranged axially outwardly at the motor can bottom 334 at the dry side of the motor can 324. The motor electronics unit 326 is electrically isolated from and thermally connected with the motor can 324 by a thermal compound 342. The thermal compound 342 allows a heat transfer from the motor electronics unit 326 to the motor can 324 to efficiently dissipate heat generated in the motor electronics unit 326.

The motor electronics unit electric ground terminal 336 is directly electrically connected to the motor can 324 by an electric connection means 338 provided as metal leaf spring 340. The metal leaf spring 340 is fixed to the motor electronics unit electric ground terminal 336 and is in touching electric contact with the circumferential surface 335 of the motor can 324. The metal leaf spring 340 is preloaded in radial direction, in particular radially inwardly, to compensate radial oscillations of the motor electronics unit 326 with respect to the motor can 324. The electric connection means 338 assures a reliable electric connection between the motor electronics unit electric ground terminal 336 and the motor can 324 to equalize the electric potentials and, as a result, to improve the EMC of the vehicle fluid pump 310.

### Reference list

- 110: vehicle fluid pump
- 112: plastic pump housing
- 114: pump wheel
- 116: rotor shaft
- 118: electronically commutated motor
- 120: motor stator
- 122: permanently magnetized motor rotor
- 124: cylindrical metal motor can
- 126: motor electronics unit
- 128: stator body
- 130: stator coils
- 132: cylindrical metal pot
- 134: motor can bottom
- 136: electric ground terminal
- 138: electric connection means
- 140: metal coil spring
- 220: motor stator
- 224: metal motor can
- 226: motor electronics unit
- 228: stator body
- 230: stator coils
- 232: metal tube
- 233: non-metallic motor can cap
- 236: electric ground terminal
- 238: electric connection means
- 240: metal spring
- 324: metal motor can
- 326: motor electronics unit
- 332: metal pot
- 334: motor can bottom
- 335: motor can circumferential surface
- 336: electric ground terminal
- 338: electric connection means
- 340: metal leaf spring
- 342: thermal compound
- A: axis of rotation
- C1: cylinder centerline
- C2: cylinder centerline

## Claims

1. A vehicle fluid pump (110) with
a pump housing (112),
an electronically commutated motor (118) with a permanently magnetized motor rotor (122),
and
a pump wheel (114) co-rotatably provided with the permanently magnetized motor rotor (122),
the electronically commutated motor (118) comprising a motor stator (120;220) with a stator body (128;228) and a plurality of stator coils (130;230),
a cylindrical metal motor can (124;224;324) fluidically separating the motor stator (120;220) and the permanently magnetized motor rotor (122), and
a motor electronics unit (226;326) with an electric ground terminal (263;336), the motor electronics unit (226;326) being located at the dry side of the cylindrical metal motor can (124;224;324) and being electrically connected to the stator coils (130;230) for energizing the stator coils (130;230) for driving the permanently magnetized motor rotor (122),
wherein an electric connection means (238;338) is provided defining a direct electric connection between the ground terminal (263;336) of the motor electronics unit (226;326) and the cylindrical metal motor can (124;224;334),
**characterized in that**
the electric connection means (238;338) is in radially direct touching electrical contact with an outside cylindrical circumferential surface (234;335) of the cylindrical metal motor can (124;224;324), and that the electrical contact is provided radially outside of the motor can bottom (334).

2. The electronic motor vehicle fluid pump (110) of claim 1, wherein the pump housing (112) is made of plastic.

3. The electronic motor vehicle fluid pump (110) of claim 1 or 2, wherein the metal motor can (224) is provided as a cylindrical metal tube (232).

4. The electronic motor vehicle fluid pump (110) of claim 1 or 2, wherein the metal motor can (124;324) is provided as a cylindrical metal pot (132;332).

5. The electronic motor vehicle fluid pump (110) of claim 4, wherein the motor electronics unit (326) is arranged at an axial end of the cylindrical metal motor can (324) electrically isolated from and thermally connected to the motor can (324) by a thermal compound (342).

6. The electronic motor vehicle fluid pump (110) of any preceding claim, wherein the electric connection means (238;338) is provided as a metal spring (240;340) fixed to the ground terminal (263;336) of the motor electronics unit (226;326) and being in electrical contact with the metal motor can (224;324).

7. The electronic motor vehicle fluid pump (110) of any preceding claim, wherein the electric connection means (238) is electrically connected with the motor stator body (228).

## Patentansprüche

1. Fahrzeug-Fluidpumpe (110) mit
einem Pumpengehäuse (112),
einem elektronisch kommutierten Motor (118) mit einem permanent magnetisierten Motorrotor (122), und
einem Pumpenrad (114), das drehfest mit dem permanent magnetisierten Motorrotor (122) ausgebildet ist,
wobei der elektronisch kommutierte Motor (118) aufweist:
einen Motorstator (120; 220) mit einem Statorkörper (128; 228) und einer Vielzahl von Statorspulen (130; 230),
ein zylindrisches metallisches Motorspaltrohr (124; 224; 324), das den Motorstator (120; 220) und den permanent magnetisierten Motorrotor (122) fluidisch trennt, und
eine Motorelektronikeinheit (226; 326) mit einem elektrischen Masseanschluss (263; 336), wobei die Motorelektronikeinheit (226; 326) auf der Trockenseite des zylindrischen metallischen Motorspaltrohres (124; 224; 324) angeordnet ist und elektrisch mit den Statorspulen (130; 230) verbunden ist, um die Statorspulen (130; 230) zum Antreiben des permanent magnetisierten Motorrotors (122) zu bestromen,
wobei ein elektrisches Verbindungsmittel (238;338) vorhanden ist, welches eine direkte elektrische Verbindung zwischen dem Masseanschluss (263; 336) der Motorelektronikeinheit (226; 326) und dem zylindrischen metallischen Motorspaltrohr (124; 224; 334) bildet,
**dadurch gekennzeichnet, dass**
das elektrische Verbindungsmittel (238; 338) in radialem direktem berührendem elektrischem Kontakt mit einer zylindrischen Außenumfangsfläche (234; 335) des zylindrischen metallischen Motorspaltrohr (124; 224; 334) ist, und dass der elektrische Kontakt radial außerhalb des Motorspaltrohrbodens (334) ausgebildet ist.

2. Elektronische Kraftfahrzeug-Fluidpumpe (110) nach Anspruch 1, bei welcher das Pumpengehäuse (112) aus Kunststoff gebildet ist.

3. Elektronische Kraftfahrzeug-Fluidpumpe (110) nach Anspruch 1 oder 2, bei welcher das metallische Motorspaltrohr (224) als ein zylindrisches Metallrohr (232) ausgebildet ist.

4. Elektronische Kraftfahrzeug-Fluidpumpe (110) nach Anspruch 1 oder 2, bei welcher das Metallmotorgehäuse (124) als ein zylindrischer Metalltopf (132) ausgebildet ist.

5. Elektronische Kraftfahrzeug-Fluidpumpe (110) nach Anspruch 4, bei welcher die Motorelektronikeinheit (326) an einem axialen Ende des zylindrischen metallischen Motorspaltrohrgehäuses (324) angeordnet ist und durch ein Wärmeleitmittel (342) elektrisch von dem Motorspaltrohr (324) isoliert sowie thermisch mit dem Motorspaltrohr (324) verbunden ist.

6. Elektronische Kraftfahrzeug-Fluidpumpe (110) nach einem der vorhergehenden Ansprüche, bei welcher das elektrische Verbindungsmittel (238;338) als eine Metallfeder (240; 340) ausgebildet ist, die an dem Masseanschluss (263;336) der Motorelektronikeinheit (226; 326) befestigt ist und in elektrischem Kontakt mit dem metallischen Motorspaltrohr (124;324) ist.

7. Elektronische Kraftfahrzeug-Fluidpumpe (110) nach einem der vorhergehenden Ansprüche, bei welcher das elektrische Verbindungsmittel (238) elektrisch mit dem Motorstatorkörper (228) verbunden ist.

## Revendications

1. Pompe à fluide pour automobile (110), comportant
un carter de pompe (112,
un moteur à commutation électronique (118) avec un rotor de moteur (122) magnétisé en permanence, et
une roue de pompe (114) co-rotative avec le rotor de moteur (122),
ledit moteur à commutation électronique (118) comprenant
un stator de moteur (120; 220) avec un corps de stator (128; 228) et plusieurs bobines de stator (130; 230),
un carter de moteur métallique cylindrique (124; 224; 324) séparant fluidiquement le stator de moteur (120; 220) et le rotor de moteur (122) magnétisé en permanence, et
une unité électronique de moteur (226; 326) avec une borne de terre électrique (263; 336), l'unité électronique de moteur (226; 326) étant située sur le côté sec du carter de moteur métallique (124; 224; 324) cylindrique et étant électriquement connectée aux bobines de stator (130 ; 230) pour alimenter les bobines de stator (130 ; 230) pour entrainer le rotor de moteur (122) magnétisé en permanence,
un moyen de connexion électrique (238 ; 338) étant prévu définissant une connexion électrique directe entre la borne de terre (263 ; 336) de l'unité électronique de moteur (226 ; 326) et le carter métallique du moteur (124; 224; 324) cylindrique,
**caractérisée en ce que**
le moyen de connexion électrique (238 ; 338) est en contact électrique radial direct avec une surface circonférentielle extérieure (234 ; 335) du carter métallique du moteur (124; 224; 324) cylindrique, et que le contact électrique est prévu radialement à l'extérieur du fond du carter de moteur (334).

2. Pompe à fluide électronique pour automobile (110) selon la revendication 1, dans laquelle le carter de pompe (112) est en plastique.

3. Pompe à fluide électronique pour automobile (110) selon la revendication 1 ou 2, dans laquelle le carter de moteur métallique (224) est prévu sous la forme d'un tube métallique cylindrique (232).

4. Pompe à fluide électronique pour automobile (110) selon la revendication 1 ou 2, dans laquelle le carter de moteur métallique (124 ; 324) est prévu sous la forme d'un pot métallique cylindrique (132 ; 332).

5. Pompe à fluide électronique pour automobile (110) selon la revendication 4, dans laquelle l'unité électronique de moteur (326) est disposée à une extrémité axiale du carter de moteur métallique (324) cylindrique isolée électriquement du et connectée thermiquement au carter de moteur (324) par un composé thermique (342).

6. Pompe à fluide électronique pour automobile (110) selon l'une quelconque des revendications précédentes, dans laquelle le moyen de connexion électrique (238, 338) est prévu sous la forme d'un ressort métallique (240 ; 340) fixé à la borne de terre (263 ; 336) de l'unité électronique de moteur (226 ; 326) et étant en contact électrique avec le carter de moteur métallique (224 ;324).

7. Pompe à fluide électronique pour automobile (110) selon l'une quelconque des revendications précédentes, dans laquelle le moyen de connexion électrique (238) est connecté électriquement au corps de stator de moteur (228).
